# EUROPÄISCHE PATENTSCHRIFT

(11) **EP 2 050 754 B1**
(45) Veröffentlichungstag und Bekanntmachung des Hinweises auf die Patenterteilung: **15.09.2010**
(21) Anmeldenummer: 08160710.3
(22) Anmeldetag: 18.07.2008
(51) Int. Cl.: C07F 7/08

(54) **Verfahren zur Herstellung von Alkyl-methoxymethyl-trimethylsilanylmethylaminen**
Method for manufacturing alkyl-methoxymethyl-trimethylsilanylmethyl amines
Procédé de fabrication d'alkyle-méthoxyméthyle-triméthylsilanylméthylamines

(30) Priorität: 01.08.2007 DE 102007036068
(43) Veröffentlichungstag der Anmeldung: 22.04.2009
(73) Patentinhaber: Wacker Chemie AG, 81737 München (DE)
(72) Erfinder: Merget, Markus, 84561 Mehring (DE)
(74) Vertreter: Fränkel, Robert

(56) Entgegenhaltungen:
- EP-A- 0 398 616
- WO-A-03/061567
- WO-A-03/062252
- WO-A-2005/009950
- WO-A-2005/049602
- WO-A-2006/040182
- DE-T2- 69 921 340
- US-A- 6 057 342
- US-B1- 6 265 434
- PADWA A ET AL: "ON THE USE OF N-Ú(TRIMETHYLSILYL)METHYL 3/4 AMINO ETHERS AS CAPPED AZOMETHINE YLIDE EQUIVALENTS" JOURNAL OF ORGANIC CHEMISTRY, AMERICAN CHEMICAL SOCIETY, EASTON.; US, Bd. 52, Nr. 2, 23. Januar 1987 (1987-01-23), Seiten 235-244, XP000601501 ISSN: 0022-3263
- HOSOMI, A. ET AL.: "N-(trimethylsilylmethyl)aminomethyl ethers as azomethine ylide synthons: a new and convenient access to pyrrolidine derivatives" CHEMISTRY LETTERS, 1984, Seiten 1117-1120, XP009107299
- CHEN ET AL: "Synthesis and characterization of trans-4-(4-chlorophenyl)pyrrolidine 3-carboxamides of piperazinecyclohexanes as ligands for the melanocortin-4 receptor" BIOORGANIC & MEDICINAL CHEMISTRY LETTERS, PERGAMON, ELSEVIER SCIENCE, GB, Bd. 17, Nr. 24, 17. Oktober 2007 (2007-10-17), Seiten 6825-6831, XP022339581 ISSN: 0960-894X

## Beschreibung

Die vorliegende Erfindung betrifft Verfahren zur Herstellung von Alkyl-methoxymethyl-trimethylsilanylmethylaminen.

In der Literatur sind die Synthesen diverser Alkyl-methoxymethyl-trimethylsilanylmethylaminen der allgemeinen Formel (A) beschrieben.

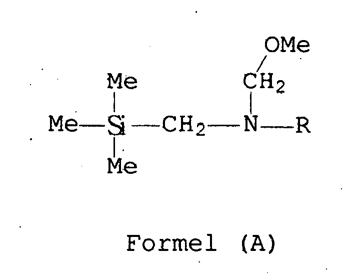

Der Rest R kann beispielsweise die Bedeutung Benzyl, tert-Butyl, 2-Vinylbenzyl, iso-Propyl, 2-Hydroxy-2-phenylethanoyl, 4-Nonylbenzyl, 4-Methoxybenzyl, 4-Chlorbenzyl, 4-Brombenzyl, Allyl, 3-Pyridinylmethyl, (R)- und (S)-1-Phenylethyl, (S)--1-Naphthylethyl oder Cyclohexyl haben.

Alkyl-methoxymethyl-trimethylsilanylmethylamine werden als Synthesebausteine zur Herstellung von Pyrrolidinen eingesetzt. Dabei werden die oben gezeigten Verbindungen in Anwesenheit starker Säuren, beispielsweise Trifluoressigsäure, oder LewisSäuren, wie Lithiumfluorid, in Azomethinylide überführt, die dann mittels einer 3+2-Cycloaddition mit Alkenen stereoselektiv abreagieren können (Reaktionsgleichung (I)) (Übersichtsartikel: Lit. I/20: A. Padwa, W. Dent, J. Org. Chem. 1987, 52, 235 - 244.).

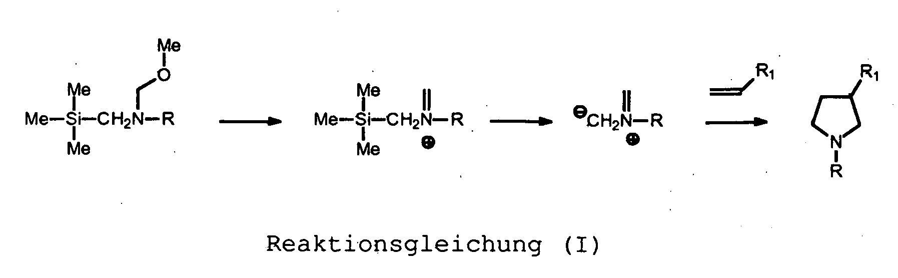

In der Literatur sind zwei grundsätzlich verschiedene Zugangswege zu Alkyl-methoxymethyl-trimethylsilanylmethylaminen beschrieben.

WO2000015611 beschreibt ein Verfahren zur Herstellung ausgehend von Alkyl-trimethylsilanylmethylaminen. Durch Deprotonierung mit einer starken Base, wie beispielsweise n-Butyllithium, wird die Verbindung in das entsprechende Amid überführt (Reaktionsgleichung (II)). Dieses wird anschließend mit Chlormethyl-methylether in einer Substitutionsreaktion zu der gewünschten Zielverbindung abreagiert. Diese Synthese hat den entscheidenden Nachteil, dass Chlormethylether hoch cancerogen sind.

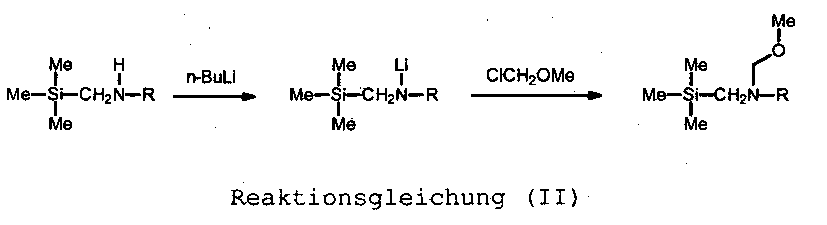

Eine andere, vielfach in der Literatur beschriebene Möglichkeit zur Herstellung von Alkyl-methoxymethyl-trimethylsilanylmethylaminen ist die Umsetzung von Alkyl-trimethylsilanylmethylaminen mit wässriger Formaldehyd-Lösung und Methanol in Gegenwart einer Base nach folgender allgemeiner Reaktionsgleichung (III).

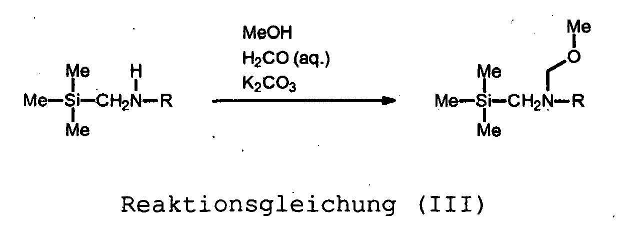

Die isolierten Ausbeuten für die unterschiedlichen Verbindungen liegen in einer Größenordnung zwischen 49 und 88 %. Oftmals wird die Zielverbindung auch nur als Rohverbindung isoliert und in situ weiter umgearbeitet. Bei den Synthesen werden zwischen 1,8 und 56 Äquivalente Methanol (bezogen auf das entsprechende Alkyl-trimethylsilanylmethylamin) und zwischen 1,0 und 2,9 Äquivalente Formaldehyd (bezogen auf das entsprechende Alkyl-trimethylsilanylmethylamin) eingesetzt. Der Formaldehyd wird als wässrige Lösung in Konzentrationen zwischen 30 und 38 Gew.-% eingesetzt. Als Base findet überwiegend K₂CO₃ Verwendung (0,04 bis 1,2 Äquivalente), in einigen Fällen wird auch NaOH verwendet (0,17 bis 1,36 Äquivalente). Die Reaktionen werden bei Temperaturen um 0°C gefahren.

P. Kotian et al Lit I/1 (Org. Process Res. Dev. 2005, 9, 193 - 197) beschreibt die Herstellung von Benzyl-methoxymethyl-trimethylsilanylmethylaminen mittels der oben beschriebenen Synthese. Bei der Reindestillation von Benzyl-methoxymethyl-trimethylsilanylmethylaminen in einem größeren Maßstab (Ansatzgröße 9,14 mol Benzyl-trimethylsilanylmethylamin) kommt es jedoch zur Zersetzung des Produktes.

WO-2003062252 und WO-2003061567 beschreiben beide in den Beispielen identische Verfahren zur Herstellung von Nonylbenzyl-methoxymethyl-trimethylsilanylmethylamin. Anstelle einer wässrigen Formaldehyd-Lösung wird in beiden Fällen Paraformaldehyd (2,13 Äquivalente) als Formaldehyd-Quelle eingesetzt. Als Base wird festes NaOH (0,17 Äquivalente) verwendet. In den Vorschriften wird die Zielverbindung nicht weiter isoliert, sondern als Rohprodukt direkt weiter umgearbeitet. Im Gegensatz zum erfindungsgemäßen Verfahren wird hier explizit das Rohprodukt weiterverarbeitet und keine Destillation nachgeschaltet, die die bekannten Probleme mit sich bringen würde. Weiterhin unterscheidet sich das beschriebene Verfahren zu dem in dieser Anmeldung darin, dass die Zugabe von Paraformaldehyd nicht äquimolar erfolgt.

Die literaturbekannten Verfahren, die als Formaldehydquelle eine wässrige Formaldehydlösung verwenden, haben alle den Nachteil, dass diese auf Grund von thermischen Instabilitäten nur mit großen Problemen auf größeren Maßstab übertragen werden können. Bei den Verfahren mit Paraformaldehyd gibt der Stand der Technik keine Informationen wie Probleme bei der Aufarbeitung beseitigt werden können.

Es bestand daher die Aufgabe ein Verfahren zur Herstellung von Alkyl-methoxymethyl-trimethylsilanylmethylaminen bereitzustellen, das hohe Ausbeuten und Reinheiten liefert und das Produkt durch Destillation isoliert werden kann. Dabei war es wichtig ein Verfahren bereitzustellen, dass verbesserte reaktionssicherheitstechnische Daten in Bezug auf die Reaktion und die Isolation besitzt.

Gegenstand der Erfindung ist ein Verfahren zur Herstellung von Alkyl-methoxymethyl-trimethylsilanylmethylaminen durch Umsetzung von Alkyl-trimethylsilanylmethylaminen mit Paraformaldehyd und Methanol in Gegenwart einer Base, dadurch gekennzeichnet, dass Paraformaldehyd und das entsprechende Alkyltrimethylsilanylmethylamin in einem molaren Verhältnis von 0,8:1,0 bis 1,0:0,8 eingesetzt werden.

Bei dem erfindungsgemäßen Verfahren wird allgemein Paraformaldehyd, Methanol und die verwendete Base vorgelegt. Hierzu wird anschließend ein Alkyl-trimethylsilanylmethylamin zudosiert. Alkyl-trimethylsilanylmethylamine können dabei nach allgemeinen literaturbekannten Standardverfahren hergestellt werden, wie beispielsweise A. Padwa, W. Dent Org. Syntheses 1989, 67, 133 - 140. Nach einer Nachreaktionszeit wird ein Lösungsmittel, beispielsweise Pentan zudosiert und die beiden entstehenden Phasen werden getrennt. Nach einer azeotopen Trocknung wird aufkonzentriert und isoliert.

Als Base wird bevorzugt K₂CO₃ eingesetzt, möglich sind auch Na₂CO₃, NaOH, NaOMe u.a. Die Menge an Base ist nicht entscheidend.

Die Isolation des Produktes kann mittels aller aus dem Stand der Technik bekannten Methoden erfolgen, bevorzugt geschieht die Isolation durch Destillation, besonders bevorzugt durch fraktionierte Destillation.

Die Reaktionstemperatur liegt im Bereich zwischen -20°C und 40°C, bevorzugt wird eine Reaktionstemperatur von -10 bis 10 °C, besonders bevorzugt 0°C.

Das Verhältnis zwischen Alkyl-trimethylsilanylmethylamin und Methanol ist beim erfindungsgemäßen Verfahren nicht entscheidend. Bevorzugt liegt das Verhältnisse zwischen 1,0 und 2,5 Mol-Äquivalenten, besonders bevorzugt bei 1,7 bis 2,2 Mol-Äquivalenten und ganz besonders bevorzugt bei 1,9 Mol-Äquivalenten.

Für das Verfahren ist die Verwendung von Paraformaldehyd als Formaldehyd-Quelle entscheidend. Dabei ist die Kettenlänge unerheblich. Bevorzugt wird kommerziellerhältlicher Paraformaldehyd ohne definierte Kettenlänge verwendet.

Andere Formaldehydquellen, wie beispielsweise Trioxan, haben sich im erfindungsgemäßen Verfahren sich als zu unreaktiv im Vergleich mit Paraformaldehyd gezeigt.

Paraformaldehyd und das entsprechende Alkyl-trimethylsilanylmethylamin werden erfindungsgemäß in einem molaren Verhältnis von 0,8:1,0 bis 1,0:0,8 eingesetzt. Bevorzugt wird ein Verhältnis von 0,9:1,0 bis 1,0:0,9 und besonders bevorzugt ein äquimolares Verhältnis von 1:1.

Das Verfahren eignet sich zu Herstellung aller Alkyl-methoxymethyl-trimethylsilanylmethylamine. Besonders bevorzugt eignet es sich zu Herstellung von Verbindungen der allgemeinen Formel (1) 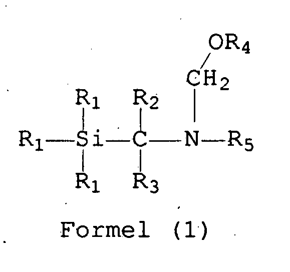 wobei die Reste gleich oder verschieden die Bedeutung haben R₁ = Methyl- oder Ethyl-, R₂ = Methyl- oder Wasserstoff, R₃ = Methyl- oder Wasserstoff, R₄ = C₁-C₄ Alkyl-, R₅ = C₁-C₁₂ Alkyl-, Benzyl-, tert-Butyl-, 2-Vinylbenzyl-, iso-Propyl-, 2-Hydroxy-2-Phenylethanoyl-, 4-Nonylbenzyl-, 4-Chlorbenzyl-, 4-Brombenzyl-, Allyl-, 3-Pyridylmethyl-, (R)-1-Phenylethyl-, (S)-1-Phenylethyl-, (S)-1-Naphthylethyl- und Cyclohexyl-.

Besonders bevorzugt ist das Verfahren zur Herstellung von Verbindungen der allgemeinen Formel (1), wobei R₁ und R₄ die Bedeutung Methyl- haben, R₂ und R₃ die Bedeutung Wasserstoff und R₅ aus der Gruppe enthaltend Ethyl-, Benzyl- und tert-Butyl gewählt wird.

Bei der kinetischen Betrachtung der aus dem Stand der Technik bekannten Reaktionen mit wässriger Formaldehydlösung mittels der "Dynamischen Differenzkalorimetrie" (DSC = Differential Scanning Calorimetry) zeigten DSC-Messungen kritische On-Set-Temperaturen mit hohen Zersetzungsenthalpien. Insbesondere kritisch ist das zweiphasige Reaktionsgemisch nach der Dosierung von Alkyl-trimethylsilanylmethylamin und der Destillationssumpf nach der Isolierung durch Destillation. Überraschenderweise konnten diese Probleme durch den Einsatz einer äquimolaren Menge von Paraformaldehyd, anstelle der wässrigen Formaldehydlösung als Formaldehyd-Quelle, zu dem Alkyl-trimethylsilanylmethylamin gelöst werden.

Das erfindungsgemäße Verfahren führt im Vergleich zu den Verfahren mit wässriger Formaldehyd-Lösung zu signifikant höheren Ausbeuten und eröffneten die Möglichkeit, die jeweilige Zielverbindung durch Destillation zu isolieren.
Die höheren Ausbeuten kommen hauptsächlich dadurch zu Stande, dass bei der Reaktion von Paraformaldehyd weniger Nebenprodukte gebildet werden. So wird das Nebenprodukt Alkyl-methoxymethoxymethyl-trimethylsilanylmethylamin bei der Verwendung von Paraformaldehyd nur in Spuren beobachtet. Bei der Verwendung einer wässrigen Formaldehydlösung entstanden dagegen ca. 10 Mol.% von dieser Verbindung. Die Ursache für diese Nebenreaktion liegt in der Stabilisierung der wässrigen Formaldehyd-Lösung mit Methanol. Das aus Methanol und Formaldehyd gebildete Halbacetal kann bei der Synthese der Zielverbindung in analoger Weise das intermediär gebildete Halbaminal angreifen. Außerdem ist bei der Verwendung von Paraformaldehyd die Dimerisierungsreaktion zurückgedrängt (Reaktionsschema IV).

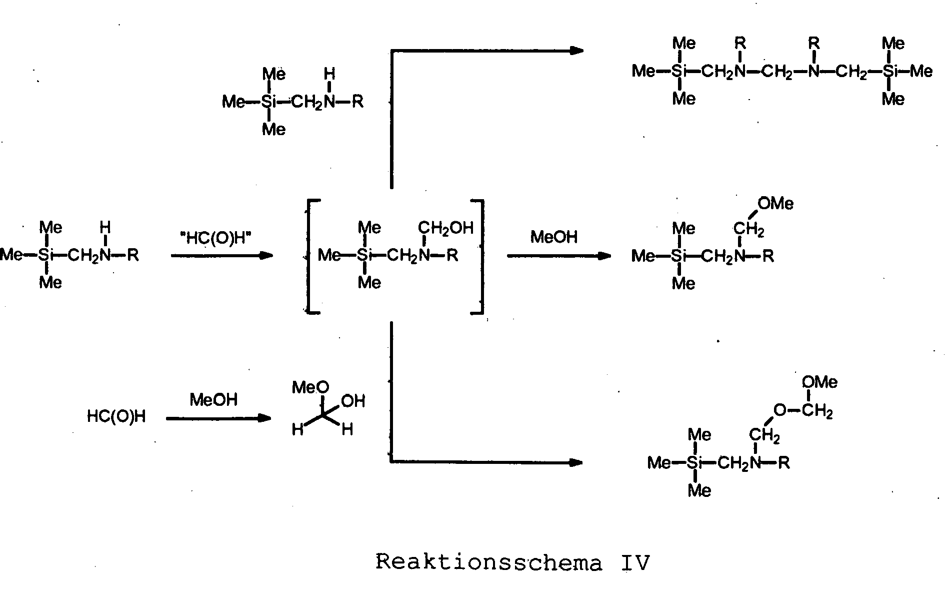

In den folgenden Beispielen soll die Erfindung näher erläutert werden:

### Beispiel 1 (Vergleichsbeispiel):

### Synthese von Ethyl-methoxymethyl-trimethylsilanylmethylamin (Ansatz mit wässriger Formaldehyd-Lösung):

18,5 g (0,228 mol) einer 37 %igen wässrigen Formaldehyd-Lösung werden vorgelegt und auf 0°C abgekühlt. Bei dieser Temperatur wird innerhalb von 15 Min. 30,0 g (0,175 mol) Ethyl-trimethylsilanylmethylamin dosiert. Anschließend wird bei dieser Temperatur innerhalb von 5 Min. 11,1 g (0,346 mol) Methanol und 12,0 g (0,087 mol) Kaliumcarbonat dosiert. Das Reaktionsgemisch wird für 1 h bei 0°C gerührt und anschließend auf Raumtemperatur erwärmt. Die Phasen werden getrennt, die obere organische Phase mit 2,0 g (0,014 mol) Kaliumcarbonat versetzt und für 1 h bei Raumtemperatur gerührt. Der Feststoff wird abfiltriert und das Filtrat fraktioniert destilliert. Ausbeute 6,30 g (22 %) einer farblosen Flüssigkeit. - Sdp. 67°C/50 mbar. - ¹H-NMR (C₆D₆): δ = 0,10 (s, 9 H), 1, 70 (t, 3 H), 2,12 (s, 2 H), 2,40 (q, 2 H), 3,18 (s, 3 H), 3,89 (s, 2 H).

### DSC-Messungen:

- Zweiphasiges Reaktionsgemisch nach der Nachreaktionszeit (On-Set-Temperatur: 62°C, Zersetzungsenthalpie 148 J/g)
- Destillationssumpf (On-Set-Temperatur: 107°C, Zersetzungsenthalpie 754 J/g)

### Beispiel für ein Spektrum einer DSC-Messung:

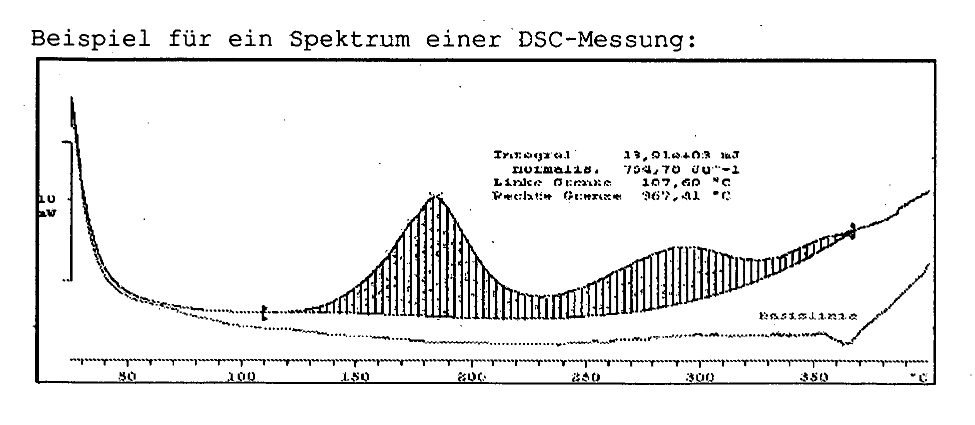

### Beispiel 2:

### Synthese von Ethyl-methoxymethyl-trimethylsilanylmethylamin (äquimolarer Ansatz):

18,0 g (0,13 mol) Kaliumcarbonat, 121,8 g (3,80 mol) Methanol und 60,0 g (2,00 mol) Paraformaldehyd werden vorgelegt und auf -5°C abgekühlt. Bei dieser Temperatur wird innerhalb von 30 Min. 262,6 g (2,00 mol) Ethyl-trimethylsilanylmethylamin dosiert. Das zweiphasige Reaktionsgemisch wird 1 h bei -5°C nachgerührt und anschließend innerhalb von 20 Min. auf Raumtemperatur erwärmt. Innerhalb von 1 Min. werden 382 g Pentan dosiert. Das zweiphasige Reaktionsgemisch wird getrennt und die obere, organische Phase für 2 h azeotrop getrocknet. Die organische Phase wird aufkonzentriert und anschließend fraktioniert destilliert. Ausbeute 228,5 g (71 %) einer farblosen Flüssigkeit.

### DSC-Messungen:

- Zweiphasiges Reaktionsgemisch nach der Nachreaktionszeit (On-Set-Temperatur: 121°C, Zersetzungsenthalpie 360 J/g)(die Exothermie ist im Vergleich zu dem alten Verfahren zwar höher, allerdings ist die On-Set-Temperatur so hoch, dass die 100K-Regel eingehalten wird).
- Destillationssumpf (On-Set-Temperatur: 121°C, Zersetzungsenthalpie 80 J/g)

### Beispiel 3 (Vergleichsbeispiel):

### Synthese von Benzyl-methoxymethyl-trimethylsilanylmethylamin (Ansatz mit 1,3 Äq. Paraformaldehyd):

2,00 g (0,014 mol) Kaliumcarbonat, 24,4 g (0,76 mol) Methanol und 15,6 g (0,52 mol) Paraformaldehyd werden vorgelegt und auf 0°C abgekühlt. Bei dieser Temperatur wird innerhalb von 30 Min. 77,4 g (0,40 mol) Benzyl-trimethylsilanylmethylamin dosiert. Das zweiphasige Reaktionsgemisch wird 1 h bei 0°C nachgerührt und anschließend innerhalb von 20 Min. auf Raumtemperatur erwärmt. Innerhalb von 1 Min. werden 190,9 g Pentan dosiert. Das zweiphasige Reaktionsgemisch wird getrennt und die obere, organische Phase für 2 h azeotrop getrocknet. Die organische Phase wird aufkonzentriert und anschließend fraktioniert destilliert. Ausbeute 74,9 g (79 %) einer farblosen Flüssigkeit.

### DSC-Messungen:

- Obere Schicht des zweiphasigen Reaktionsgemisches nach der Nachreaktionszeit (On-Set-Temperatur: 154°C, Zersetzungsenthalpie 414 J/g)
- Untere Schicht des zweiphasigen Reaktionsgemisches nach der Nachreaktionszeit (On-Set-Temperatur: 72°C, Zersetzungsenthalpie 123 J/g)
- Destillationssumpf (On-Set-Temperatur: 134°C, Zersetzungsenthalpie 461 J/g)

### Beispiel 4:

### Synthese von Benzyl-methoxymethyl-trimethylsilanylmethylamin (äquimolarer Ansatz):

2,50 g (0,018 mol) Kaliumcarbonat, 30,4 g (0,95 mol) Methanol und 15,0 g (0,50 mol) Paraformaldehyd werden vorgelegt und auf 0°C abgekühlt. Bei dieser Temperatur wird innerhalb von 30 Min. 96,7 g (0,50 mol) Benzyl-trimethylsilanylmethylamin dosiert. Das zweiphasige Reaktionsgemisch wird 1 h bei 0°C nachgerührt und anschließend innerhalb von 20 Min. auf Raumtemperatur erwärmt. Innerhalb von 1 Min. werden 190,9 g Pentan dosiert. Das zweiphasige Reaktionsgemisch wird getrennt und die obere, organische Phase für 2 h azeotrop getrocknet. Die organische Phase wird aufkonzentriert und anschließend fraktioniert destilliert. Ausbeute 105,9 g (89 %) einer farblosen Flüssigkeit. - Sdp. 94°C/1 mbar. - ¹H-NMR (C₆D₆): δ = 0,09 (s, 9 H), 2,21 (s, 2 H), 3,00 (s, 3 H), 3,75 (s, 2 H), 3,87 (s, 2 H), 7,10 - 7,45 (m, 5 H).

### DSC-Messungen:

- Obere Schicht des zweiphasigen Reaktionsgemisches nach der Nachreaktionszeit (On-Set-Temperatur: 225°C, Zersetzungsenthalpie 163 J/g)
- Untere Schicht des zweiphasigen Reaktionsgemisches nach der Nachreaktionszeit (On-Set-Temperatur: 80°C, Zersetzungsenthalpie 14 J/g)
- Destillationssumpf (On-Set-Temperatur: 210°C, Zersetzungsenthalpie 646 J/g)

### Beispiel 5:

### Synthese von Benzyl-methoxymethyl-trimethylsilanylmethylamin (Ansätze mit unterschiedlichen Stöchiometrien):

Die Ansätze wurden - unter Berücksichtigung der Stöchiometrie - analog zum Beispiel 4 durchgeführt.

Bei dem erfindungsgemäßen Verfahren ist die Stöchiometrie für Ausbeute und On-Set-Temperatur entscheidend (die angegebenen Zersetzungsenthalpien beziehen sich auf den Destillationssumpf):

| **Versuch** | **Ausbeute** | **Äq. PFA** | **On-Set 1** | **Zersetzungsenthalpie 1** | **On-Set 2** | **Zersetzungsenthalpie 2** |
|---|---|---|---|---|---|---|
| MF 524 | 43,8 | 0,90 | 260°C | 69 J/g | | |
| MF 525 | 66,0 | 0,95 | 256°C | 400 J/g | | |
| MF 522 | 81,3 | 1,00 | 245°C | 91 J/g | --- | --- |
| MF 528 | 81,2 | 1,05 | 158°C | 291 J/g | 361°C | 12 J/g |

Bei einem substöchiometrischen Einsatz von Paraformaldehyd sinkt die Ausbeute ab (von 81,3 % bei 1,0 Äquivalenten auf 43,8 % bei 0,90 Äquivalenten). Bei einem überstöchiometrischen Einsatz von Paraformaldehyd (1,05 Äq.) bleibt die Ausbeute zwar nahezu unverändert, allerdings sinkt die On-Set-Temperatur von ca. 250°C auf 158°C ab.

## Patentansprüche

1. Verfahren zur Herstellung von Alkyl-methoxymethyltrimethylsilanylmethylaminen durch Umsetzung von Alkyltrimethylsilanylmethylaminen mit Paraformaldehyd und Methanol in Gegenwart einer Base, **dadurch gekennzeichnet, dass** Paraformaldehyd und das entsprechende Alkyltrimethylsilanylmethylamin in einem molaren Verhältnis von 0,8:1,0 bis 1,0:0,8 eingesetzt werden.

2. Verfahren nach Anspruch 1, **dadurch gekennzeichnet, dass** Paraformaldehyd, Methanol und die verwendete Base zu Beginn der Reaktion vorgelegt werden.

3. Verfahren nach Anspruch 1 bis 2, **dadurch gekennzeichnet, dass** als Base eine oder mehrere Verbindungen aus der Gruppe enthaltend K₂CO₃, Na₂CO₃, NaOH oder NaOMe eingesetzt werden.

4. Verfahren nach Anspruch 1 bis 3, **dadurch gekennzeichnet, dass** die Isolation des erhaltenen Produktes durch Destillation erfolgt.

5. Verfahren nach Anspruch 1 bis 4, **dadurch gekennzeichnet, dass** die Reaktionstemperatur im Bereich zwischen -20°C und 40°C liegt.

6. Verfahren nach Anspruch 1 bis 5, **dadurch gekennzeichnet, dass** das Verhältnis zwischen Alkyltrimethylsilanylmethylamin und Methanol zwischen 1,0 und 2,5 Mol-Äquivalenten liegt.

7. Verfahren nach Anspruch 1 bis 6, **dadurch gekennzeichnet, dass** die Alkyl-methoxymethyl- trimethylsilanylmethylamine die allgemeinen Formel (1) 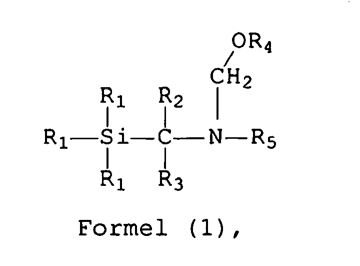 aufweisen, wobei die Reste gleich oder verschieden sind und die
Bedeutung R₁ = Methyl- oder Ethyl-, R₂ = Methyl- oder Wasserstoff, R₃ = Methyl- oder Wasserstoff, R₄ = C₁-C₄ Alkyl-, R₅ = C₁-C₁₂ Alkyl-, Benzyl-, tert-Butyl-, 2-Vinylbenzyl-, iso-Propyl-, 2-Hydroxy-2-Phenylethanoyl-, 4-Nonylbenzyl-, 4-Chlorbenzyl-, 4-Brombenzyl-, Allyl-, 3-Pyridylmethyl-, (R)-1-Phenylethyl-, (S)-1-Phenylethyl-, (S)-1-Naphtylethyl- und Cyclohexyl- haben.

8. Verfahren nach Anspruch 7, **dadurch gekennzeichnet, dass** R₁ und R₄ die Bedeutung Methyl- haben, R₂ und R₃ die Bedeutung Wasserstoff und R₅ aus der Gruppe enthaltend Ethyl-, Benzyl- und tert-Butyl gewählt wird.

## Claims

1. Process for preparing alkyl (methoxymethyl) trimethylsilanylmethylamines by reacting alkyltrimethylsilanylmethylamines with paraformaldehyde and methanol in the presence of a base, **characterized in that** paraformaldehyde and the appropriate alkyltrimethylsilanylmethylamine are used in a molar ratio of from 0.8:1.0 to 1.0:0.8.

2. Process according to Claim 1, **characterized in that** paraformaldehyde, methanol and the base used are initially charged at the start of the reaction.

3. Process according to Claim 1 or 2, **characterized in that** the base used is one or more compounds from the group comprising K₂CO₃, Na₂CO₃, NaOH and NaOMe.

4. Process according to Claims 1 to 3, **characterized in that** the resulting product is isolated by distillation.

5. Process according to Claims 1 to 4, **characterized in that** the reaction temperature is in the range between -20°C and 40°C.

6. Process according to Claims 1 to 5, **characterized in that** the ratio between alkyltrimethylsilanylmethylamine and methanol is between 1.0 and 2.5 molar equivalents.

7. Process according to Claims 1 to 6, **characterized in that** the alkyl (methoxymethyl)trimethylsilanylmethylamines have the general formula (1) 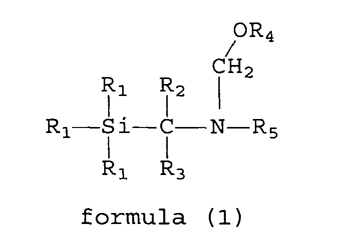 where the radicals are the same or different and are defined as follows: R₁ = methyl or ethyl, R₂ = methyl or hydrogen, R₃ = methyl or hydrogen, R₄ = C₁-C₄ alkyl, R₅ = C₁-C₁₂ alkyl, benzyl, tert-butyl, 2-vinylbenzyl, iso-propyl, 2-hydroxy-2-phenylethanoyl, 4-nonylbenzyl, 4-chlorobenzyl, 4-bromobenzyl, allyl, 3-pyridylmethyl, (R)-1-phenylethyl, (S)-1-phenylethyl, (S)-1-naphthylethyl and cyclohexyl.

8. Process according to Claim 7, **characterized in that** R₁ and R₄ are each defined as methyl, R₂ and R₃ are each defined as hydrogen, and R₅ is selected from the group comprising ethyl, benzyl and tert-butyl.

## Revendications

1. Procédé pour la préparation d'alkylméthoxyméthyl-triméthylsilanylméthylamines par mise en réaction d'alkyltriméthylsilanylméthylamines avec du paraformaldéhyde et du méthanol en présence d'une base, **caractérisé en ce qu'**on utilise du paraformaldéhyde et l'alkyltriméthylsilanylméthylamine correspondante en un rapport molaire de 0,8:1,0 à 1,0:0,8.

2. Procédé selon la revendication 1, **caractérisé en ce qu'**au début de la réaction on dispose au préalable du paraformaldéhyde, du méthanol et la base utilisée.

3. Procédé selon la revendication 1 à 2, **caractérisé en ce qu'**on utilise comme base un ou plusieurs composés choisis dans le groupe contenant K₂CO₃, Na₂CO₃, NaOH ou NaOMe.

4. Procédé selon la revendication 1 à 3, **caractérisé en ce que** l'isolement du produit obtenu s'effectue par distillation.

5. Procédé selon la revendication 1 à 4, **caractérisé en ce que** la température de réaction se situe dans la plage comprise entre -20 °C et 40 °C.

6. Procédé selon la revendication 1 à 5, **caractérisé en ce que** le rapport entre l'alkyltriméthylsilanylméthylamine et le méthanol est compris entre 1,0 et 2,5 équivalents molaires.

7. Procédé selon la revendication 1 à 6, **caractérisé en ce que** les alkyl-méthoxyméthyltriméthylsilanylméthylamines correspondent à la formule générale (1) 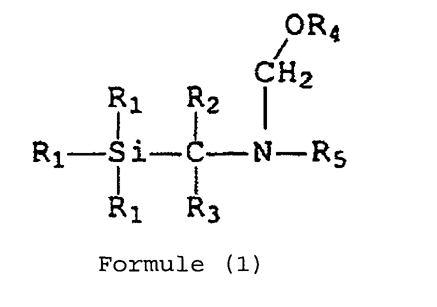 dans laquelle les radicaux sont identiques ou différents et ont les significations R₁ = méthyl- ou éthyl-, R₂ = méthyl- ou un atome d'hydrogène, R₃ = méthyl- ou un atome d'hydrogène, R₄ = alkyl(C₁-C₄)-, R₅ = alkyl(C₁-C₁₂)-, benzyl-, tert-butyl-, 2-vinylbenzyl-, isopropyl-, 2-hydroxy-2-phényléthanoyl-, 4-nonylbenzyl-, 4-chlorobenzyl-, 4-bromobenzyl-, allyl-, 3-pyridylméthyl-, (R)-1-phényléthyl-, (S)-1-phényléthyl-, (S)-1-naphtyléthyl- et cyclohexyl-.

8. Procédé selon la revendication 7, **caractérisé en ce que** R₁ et R₄ représentent méthyl-, R₂ et R₃ représentent un atome d'hydrogène et R₅ est choisi dans le groupe contenant éthyl-, benzyl- et tert-butyle.
